(19) Europäisches Patentamt / European Patent Office / Office européen des brevets

(11) **EP 2 566 273 A1**

(12) **EUROPEAN PATENT APPLICATION**

(43) Date of publication:
**06.03.2013 Bulletin 2013/10**

(51) Int Cl.:
**H04W 72/08** *(2009.01)*    *H04W 16/14 (2009.01)*
**H04W 72/04** *(2009.01)*

(21) Application number: **11179899.7**

(22) Date of filing: **02.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Université Libre de Bruxelles**
**1050 Bruxelles (BE)**

(72) Inventors:
• **Van Den Biggelaar, Olivier**
  **B-1030 BRUXELLES (BE)**
• **Horlin, François**
  **B-1150 BRUXELLES (BE)**

(74) Representative: **pronovem**
**Office Van Malderen**
**Avenue Josse Goffin 158**
**1082 Bruxelles (BE)**

(54) **Method for dynamically determining sensing time in cognitive radio network**

(57)    The present invention is related to an iterative method for dynamically determining sensing time in cooperative secondary cognitive radio network comprising a plurality of cognitive nodes, said method comprising the steps of:

a) each secondary cognitive nodes sensing the presence of a radio signal pertaining to a primary network during a predetermined period of time;

b) each secondary cognitive nodes sending the results of sensing to a coordinating node globally deciding upon the presence of a primary network signal;

c) depending on the presence of the primary network signal, secondary nodes transmitting a communication signal pertaining to the communication in the secondary network;

d) each secondary nodes determining upon current and past local and global conditions the sensing duration to be used in the next iteration, said determination maximising the secondary nodes throughputs,

step a to d being iteratively performed,

wherein the maximisation of the secondary nodes throughputs is performed by minimising for each node a cost function which decreases if the difference between the realised throughput and a required throughput decreases.

Fig. 1

EP 2 566 273 A1

**Description**

**Field of the Invention**

The present invention is related to an iterative method for dynamically determining sensing time in cooperative secondary cognitive radio network comprising a plurality of cognitive nodes.

**State of the Art**

The scarcity of available radio spectrum frequencies, densely allocated by the regulators, represents a major bottleneck in the deployment of new wireless services. Cognitive radios have been proposed as a new technology to overcome this issue by F. K. JONDRAL and T. A. WEISS, in "Spectrum pooling: An innovative strategy for the enhancement of spectrum efficiency", IEEE Radio Communications, vol. 42, no. 3, pp. S8-S14, 2004.

For cognitive radio use, the assigned frequency bands are opened to secondary users, provided that interference induced on the primary licensees is negligible. Cognitive radios are established in two steps: the radios firstly sense the available frequency bands and secondly communicate using these bands.

One of the main challenges faced by wireless communication system designers is the fading phenomenon. This phenomenon is related to an attenuation of the received power due to destructive interferences between the multiple interactions of the emitted wave with the environment.

To tackle the fading problem when sensing the frequency spectrum, cooperative spectrum sensing has been proposed to take advantage of the spatial diversity in wireless channels.

In cooperative spectrum sensing, the secondary cognitive nodes send the results of their individual observations of the primary signal to a coordinator node through specific control channels.

The coordinator node then combines the received information in order to make a decision about the primary network presence.

Each cognitive node observes the primary signal during a certain sensing time, which should be chosen high enough to ensure the correct detection of the primary emitter but low enough so that the node has still enough time to communicate.

Usually each secondary nodes is allocated to a particular sub-band, so that he will not disturb the sensing result of another node.

In the literature, as disclosed by E. PEH et Al., in "Sensing-throughput tradeoff for cognitive radio networks", in Proceedings of the IEEE International Conference on Communications (ICC), June 2007 and S. STOTAS et Al., in "Sensing time and power allocation optimization in wideband cognitive radio networks", in GLOBECOM 2010, 2010 IEEE Global Telecommunications Conference, dec. 2010, pp. 1 -5., the sensing times used by the cognitive nodes are generally assumed to be identical and allocated by a central authority.

K. CLANCY et Al., disclose in the article "Evolutionary game framework for behavior dynamics in cooperative spectrum sensing", in the Proceedings of the Global Telecommunications Conference (GLOBECOM), November 2008, a method wherein the sensing performance of a network of independent cognitive nodes that individually select their sensing times is analyzed using evolutionary game theory. In this document, only two nodes behaviour is analysed. The nodes are either selfish, or on contrary fully cooperative. The resulting sensing time for the secondary is then binary: they may either use a predetermined time to sense the presence of the primary network or decide not to cooperate and just use the information of the cooperating nodes. The decision to cooperate is, in this document, independent from the real local needs of throughput.

**Aims of the Invention**

The present invention aims to provide a method for locally determining the local sensing time of secondary nodes in a cognitive radio network that maximise their throughputs.

**Summary of the Invention**

The present invention is related to an iterative method for dynamically determining sensing time in cooperative secondary cognitive radio network comprising a plurality of cognitive nodes, said method comprising the steps of:

   a) each secondary cognitive nodes sensing the presence of a radio signal pertaining to a primary network during a predetermined period of time;
   b) each secondary cognitive nodes sending the results of sensing to a coordinating node globally deciding upon the presence of a primary network signal;

c) depending on the presence of the primary network signal, secondary nodes transmitting a communication signal pertaining to the communication in the secondary network;

d) each secondary nodes determining upon current and past local and global conditions the sensing duration to be used in the next iteration, said determination maximising the secondary nodes throughputs,

step a to d being iteratively performed.

According to particular preferred embodiments, the present invention further comprises one, or a suitable combination of at least two of the following features:

- the maximisation of the secondary nodes throughputs is performed by minimising for each node a cost function which decreases if the difference between the realised throughput and a required throughput decreases, preferably, in that case, the cost function is in the from $c_{j,t} = \left( \widehat{R_{j,t}} - \overline{R_j} \right)^2$, $C_{j,t}$ being the cost function for the node j at iteration t, $\widehat{R_{j,t}}$ is the throughput realised by node j during iteration t, and $\overline{R_j}$ is the required throughput of node j;

- the determination of the sensing duration by each secondary nodes is performed using a learning algorithm, preferably, said learning algorithm is a Q-learning algorithm;

- the results sent in step b) is a one bit data representing a local decision about the presence of the primary network

- the coordinating node sends the results of the global decision about the presence of a primary network to each secondary nodes as a one bit data

- the number N of possible sensing duration determined in step d is limited, said number N being preferably higher than 1;

- the ratio r of the duration $T_L$ of one iteration divided by the duration of a communication time slot $T_H$ is an integer comprised between 8 and 12;

- the duration of the sensing duration of node j determined in step d) is $M_j.T_s$, $M_j$ being an integer comprised between 0 and s, s being an integer larger than 2, $T_s$ being the duration of a sensing time slot and fulfilling the condition $T_H = ST_s$.

## Brief Description of the Drawings

Fig. 1 represents time diagram of the sensing time allocation algorithm.

Fig. 2 represents the result of the Q-Learning algorithm when no exploration strategy is used ($\varepsilon = 0$.

Fig. 3 represents the result of the Q-Learning algorithm when an exploration strategy is used ($\varepsilon \neq 0$)

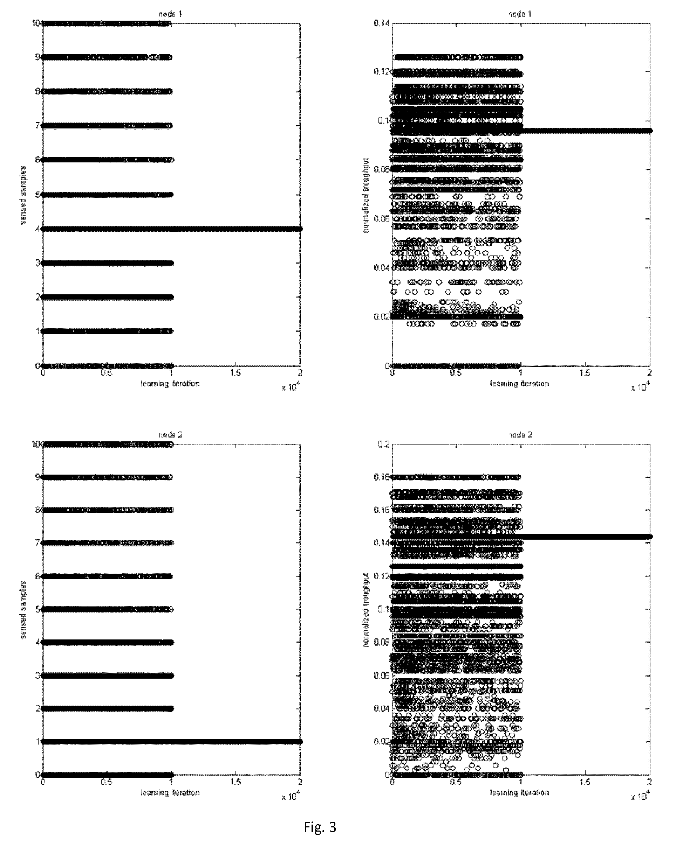

Fig. 3 represents the average throughput achieved by the Q-learning algorithm with respect to parameter $r = T_L T_H$.

## Detailed Description of the Invention

In the present invention, a decentralized sensing time allocation in cognitive radio communication is proposed. The proposed decentralised sensing time allocation is performed in a way that maximizes the throughputs of the radios.

Advantageously, in the present invention, the maximisation of the throughput takes into account a target throughput (needed throughput) for each nodes, so that inactive nodes(i.e. having low throughput needs) have an incentive towards higher participation in the sensing than active nodes, thereby increasing the efficiency of the global network.

The multiple cognitive radios of the invention (the agents) self-adapt by directly interacting with the environment in real time and by properly utilizing their past experience. They aim to distributively learn an optimal strategy to maximize their throughputs.

Preferably, the time allocation is dynamically adapted using a Q-learning algorithm to share the sensing time among the cognitive radios.

This distributed allocation of the sensing times presents several advantages compared to a centralized allocation performed by the coordinator node:

- self-adaptability of the system to a variation of parameters (such as the gains of the sensing channels),
- scalability of the system as the need for control communication is minimized,
- maintainability of the system thanks to the modularity of the multiple agents and,
- computational efficiency as the resolution of the allocation problem is distributed.

**Problem Formulation**

***Cooperative Spectrum Sensing***

In the following example of implementation of the invention, a cognitive radio cell made of *N+1* nodes including a central base station was considered. Each node *j* performs an energy detection of the received signal using $M_j$ samples.
The observed energy value at the *j*th node is given by the random variable:

$$Y_j = \begin{cases} \sum_{i=1}^{M_j} n_{ji}^2, & under\ H_0 \\ \sum_{i=1}^{M_j} (s_{ji} + n_{ji})^2, & under\ H_1 \end{cases} \qquad (1)$$

where $s_{ji}$ and $n_{ji}$ denote the received primary signal and additive white noise at the *i*th sample of the *j*th cognitive radio, respectively (*1≤j≤N, 1≤i≤M_j*). These samples are assumed to be real without loss of generality. $H_o$ and $H_1$ represent the hypotheses associated to primary signal absence and presence, respectively.
In the distributed detection problem, the coodinator node receives information from each of the *N* nodes (e.g., the communicated $Y_j$) and must decide between the two hypotheses.
It is assumed that the instantaneous noise at each node $n_{ji}$ can be modeled as a zero-mean Gaussian random variable with unit variance $nji \sim N(0, 1)$ . Let $\gamma_j$ be the signal-to-noise ratio (SNR) computed at the *j*th node, defined as

$$\gamma_j = \frac{1}{M_j} \cdot \sum_{i=1}^{M_{ji}} s_{ji}^2 .$$

Since $n_{ji} \sim N(0,1)$, the random variable $Y_j$ can be expressed as:

$$Y_j \sim \begin{cases} \chi_{M_j}^2, & under\ H_0 \\ \chi_{M_j}^2(\lambda_j), & under\ H_1 \end{cases} \qquad (2)$$

where $\chi_{M_j}^2$ denotes a central chi-squared distribution with $M_j$ degrees of freedom and $\lambda_j = M_j\gamma_j$ is the non-centrality parameter. Furthermore, if $M_j$ is large, the Central Limit Theorem gives:

$$Y_j \sim \begin{cases} N(M_j, 2M_j), & under\ H_0 \\ N(M_j(1 + \gamma_j), 2M_j(1 + 2\gamma_j)), & under\ H_1 \end{cases} \qquad (3)$$

From equation (3), it can be shown that the false alarm probability $P_{F_j} = Pr\{Y_j > \lambda | H_0\}$ is given by:

$$P_{F_j} = Q\left(\frac{\lambda - M_j}{\sqrt{2M_j}}\right) \quad \text{and the detection probability} \quad P_{D_j} = Pr\{Y_j > \lambda | H_1\} \text{is given by:}$$

$$P_{D_j} = Q\left(\frac{\lambda - M_j(1 + \gamma_j)}{\sqrt{2M_j(1 + 2\gamma_j)}}\right) \qquad (5)$$

where $Q(x) = \int_{x_1}^{+\infty} \frac{1}{\sqrt{2\pi}} e^{\frac{-t^2}{2}} dt.$

By combining Equations (4) and (5), the false alarm probability can be expressed with respect to the detection probability:

$$P_{F_j} = Q \left( Q^{-1} \left( P_{D_j} \right) \sqrt{(1 + 2\gamma_j)} + \gamma_j \sqrt{\frac{M_j}{2}} \right) \qquad (6)$$

where $Q^{-1}(x)$ is the inverse function of $Q(x)$.

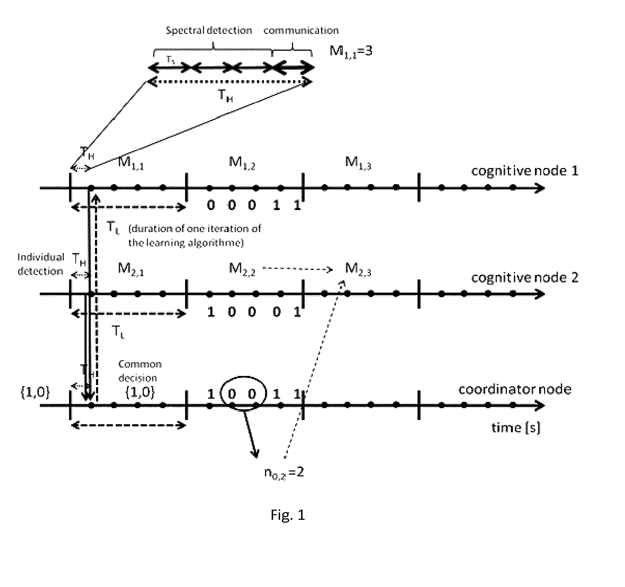

As illustrated on Figure 1, we consider that every $T_H$ seconds, each node sends a one bit value representing the local hard decision about the primary network presence to the base station.

The base station combines the received bits in order to make a global decision for the nodes. The base station decision is sent back to the node as a one bit value. Therefore, duration of the communication with the base station may be assumed to be negligible compared to the duration $T_H$ of a time slot.

In this example, focus was given on the logical-OR fusion rule at the base station but the other fusion rules could be similarly analyzed. Under the logical-OR fusion rule, the global detection probability $P_D$ and the global false alarm probability $P_F$ depend respectively on the local detection probabilities $P_{D_j}$ and false alarm probabilities $P_{F_j}$ :

$$P_D = 1 - \prod_{j=1}^{N}(1 - P_{D_j}) \qquad (7)$$

and

$$P_F = 1 - \prod_{j=1}^{N}(1 - P_{F_j}) \qquad (8)$$

Given a target global detection probability $P_D$, we thus have:

$$P_{D_j} = 1 - (1 - \overline{P_D})^{1/N} \qquad (9)$$

and Equation (6) can be rewritten as:

$$P_{F_j} = Q \left( Q^{-1} \left( 1 - (1 - \overline{P_D})^{1/N} \right) \sqrt{(1 + 2\gamma_j)} + \gamma_j \sqrt{\frac{M_j}{2}} \right) \quad (10)$$

***Throughput* of a *Secondary User***

A secondary user performs data transmission during the time slots that have been identified as free by the base station. In each of these time slots, $M_j T_S$ seconds are used by the secondary user to sense the spectrum, where $T_S$ denote the sampling period. The remaining $T_H - M_j T_s$ seconds are used for data transmission. The secondary user average throughput $R_j$ is given by the sum of the throughput obtained when the primary network is absent and no false alarm has been generated by the base station plus the throughput obtained when the primary network is present but has not been detected by the base station:

$$R_j = \frac{T_H - M_j T_S}{T_H} P_{H_0}(1 - P_F)C_{H_0,j}$$

$$+ \frac{T_H - M_j T_S}{T_H}(1 - P_{H_0})(1 - P_D)C_{H_1,j} \qquad (11)$$

where $P_{H_0}$ denotes the probability that the primary network is absent, $C_{H_0,j}$ represents the data rate of the secondary user under $H_0$ and $C_{H_1,j}$ represents the data rate of the secondary user under $H_1$. The target detection probability $P_D$ is required to be close to 1 since the cognitive radios should not interfere with the primary network; moreover, $P_{H_0}$ is usually close to 1 and $C_{H_1,j}$ due to the interference from the primary network. Therefore, 11 can be approximated by:

$$R_j \approx \frac{T_H - M_j T_S}{T_H}P_{H_0}(1 - P_F)C_{H_0,j} \qquad (12)$$

### *Sensing Time Allocation Problem*

Equations (8), (10) and (12) show that there is a tradeoff for the choice of the sensing window length $M_j$: on the one hand, if $M_j$ is high then the user j will not have enough time to perform his data transmission and $R_j$ will be low. On the other hand, if all the users use low $M_j$ values, then the global false alarm probability in (12) will be high and all the average throughputs will be low.

The sensing time allocation problem consists in finding the optimal sensing window length $\{M_1, ..., M_N\}$ that minimizes a cost function $f(R_1, ..., R_N)$ depending on the secondary throughputs.

In this example, the following cost function is considered:

$$f(R_1, ..., R_N) = \sum_{j=1}^{N}(R_j - \bar{R}_j)^2 \qquad (13)$$

where $\bar{R}_j$ denote the throughput required by node j.

It is observed that the cost decreases with respect to $R_j$ until $R_j$ reaches the threshold value $\bar{R}_j$, then the cost increases with respect to $R_j$. This should prevent secondary users from selfishly transmitting with a throughput higher than required, which would reduce the achievable throughputs for the other secondary users.

Altough a base station could determine the sensing window lengths that minimize function (13) and send these optimal values to each secondary user, in this paper we rely on the secondary users themselves to determine their individual best sensing window length. This decentralized allocation avoids the introduction of signaling overhead in the system.

### **Decentralized Learning Algorithm**

### *Q-Learning Algorithm*

In this example, a multi-agent Q-learning algorithm was used to allocate the sensing durations among the secondary users. Each secondary user is an agent that aims to learn an optimal sensing time allocation policy by interacting with the environment.

Q-learning implementation requires the environment to be modeled as a finite-state discrete-time stochastic system. The set of all possible states of the environment is denoted S. At each learning iteration, the agent that executes the learning algorithm performs an action chosen from the finite set A of all possible actions. Each learning iteration consist of the following sequence:

1. the agent senses the state $s \in S$ of the environment;
2. based on s and its accumulated knowledge, the agent chooses and performs an action $a \in A$;

3. because of the performed action, the state of the environment is modified. The new state is denoted s', the transition from s to s' generates a cost $c \in R$ for the agent;

4. the agent uses c and s' to update the accumulated knowledge that made him choose the action a when the environment was in state s.

The Q-learning algorithm keeps a quality information (the Q-value) for every state-action couple (*s, a*) it has tried. The *Q-value Q(s,a)* represents how high the expected quality of an action a is when the environment is in state s as explained by I. Millington, in "Artificial Intelligence for Games", pp. 612-628, Morgan Kaufmann Publishers, 2006. The following policy is used for the selection of the action a by the agent when the environment is in state s:

$$a = \begin{cases} \arg\max_{\tilde{a} \in A} Q(s, \widetilde{a}), \ with \ probability \ 1 - \varepsilon \\ random \ action \ \in A, \ with \ probability \ \varepsilon \end{cases} \quad (14)$$

where $\varepsilon$ is the randomness for exploration of the learning algorithm.

The cost *c* and the new state *s'* generated by the choice of action a in state *s* are used to update the *Q-value Q(s,a)* based on how good the action *a* was and how good the new optimal action will be in state *s'*. The update is handled by the following rule:

$$Q(s, a) \leftarrow (1 - \alpha)Q(s, a) + \alpha(-c + \gamma \max_{a' \in A} Q(s', a')) \quad (15)$$

where a is the learning rate and y is the discount rate of the algorithm.

The learning rate $\alpha \in [0, 1]$ is used to control the linear blend between the previously accumulated knowledge about the (*s,a*) couple, $Q(s,a)$, and the newly received quality information $(-c + \gamma \max_{\alpha' \in A} Q(s', \alpha'))$. A high value of a gives little importance to previous experience, while a low value of a gives an algorithm that learns slowly as the stored Q-values are not easily altered by new information.

The discount rate $\gamma \in [0,1]$ is used to control how much the success of a later action *a'* should be brought back to the earlier action a that led to the choice of *a'*. A high value of $\gamma$ gives a low importance to the cost of the current action compared to the Q-value of the new state this actions leads to, while a low value of $\gamma$ would rate the current action almost only based on the immediate reward it provides.

The randomness for exploration $\varepsilon \in [0,1]$ is used to control how often the algorithm should take a random action instead of the best action it knows. A high value of $\varepsilon$ favours exploration of new good actions over exploitation of existing knowledge. On the other hand, a low value of $\varepsilon$ reinforces what the algorithm already knows instead of trying to find new better actions.

The exploration-exploitation trade-off is typical of learning algorithms. In this paper, we consider online learning (i.e. at every time step the agents should display intelligent behaviours) which requires a low $\varepsilon$ value, preferably comprised between 0 and 0,2, more preferably about 0,1.

### *Q-Learning Implementation for Sensing Time Allocation*

Each secondary user is an agent in charge of sensing the environment state, selecting an action according to policy (14), performing this action, sensing the resulting new environment state, computing the induced cost and updating the state-action Q-value according to rule (15). In this subsection, we specify the states, actions and cost function used to solve the sensing time allocation problem.

At each iteration $t \in \{1,...,K\}$ of the learning algorithm, a secondary user $j \in \{1,...,N\}$ represents the local state $S_{j,t}$ of the environment as the following pair:

$$s_{j,t} = \{M_{j,t}, nN_{H_0,t}\} \quad (16)$$

where $M_{j,t}$ is the length of the sensing window used by node j during the $T_L$ seconds of the learning iteration t. In the present example, it is assumed that one learning iteration spans several time slots:

$$T_L = rT_H, r \in N_0 \qquad (17)$$

The optimal value of r will be determined hereafter. Let s denote the ratio between the duration of a time slot and the sampling period:

$$T_H = sT_S, s \in N_0 \qquad (18)$$

during each learning period t, the sensing window length takes one out of $s+1$ values:

$$M_{j,t} \in \{0,1,...,s\} \qquad (19)$$

In Equation (16), $n_{H_0,t}$ denotes the number of time slots that have been identified as free by the base station during the $t^{th}$ learning period. It can be seen as the realization of the binomial random variable characterized by a number of trials r and a probability of success $P_{H_0}(1 - P_F)$:

$$n_{H_0,t} \in \mathcal{B}\left(r, P_{H_0}(1 - P_F)\right) \qquad (20)$$

The number of free time slots takes one out of r+1 values:

$$n_{H_0,t} \in \{0,1,...,R\} \qquad (21)$$

The average throughput $\hat{R}_{j,t}$ realized by node j during the learning period t is given by:

$$\hat{R}_{j,t} = \frac{n_{H_0,t}(T_H - M_{j,t}T_S)}{T_L} C_{H_0,j} \qquad (22)$$

$$= \frac{n_{H_0,t}}{r}\left(1 - \frac{M_{j,t}}{s}\right) \qquad (23)$$

It is therefore observed that the state defined by Equation (16) contains the two variables that influence the realized average throughput. $M_{j,t}$ represents the part of $\hat{R}_{j,t}$ that is entirely under the control of node j and $n_{H0,t}$ represents the part of $\hat{R}_{j,t}$ that is only partially controlled by node j.

At each iteration t, the action selected by the secondary user j is the duration of the sensing window to be used in the next learning iteration. The set of all possible actions is therefore given by Equation (19).

The cost function used by the Q-Learning algorithm depends on the average throughput realized by node j:

$$c_{j,t} = -\hat{R}_{j,t} \qquad (24)$$

It is noted that this cost function makes every node try to achieve the maximum $\hat{R}_{j,t}$ with no consideration for the other nodes in the secondary network.

## Numerical Results

Unless otherwise specified, the following simulation parameters are used: two nodes (*N=2*) are able to transmit at a maximum data rate $C_{H0,1}=C_{H0,2}=0.6$. One node has a sensing channel characterized by $\gamma_1=0$ dB and the second one has a poorer sensing channel characterized by $y_2 = - 10$ dB.

It is assumed that the primary network probability of absence is $P_{H0}=0.9$. The target detection probability is $P_D=0.95$.

The following other parameters were used: s= 10 samples per time slot and r=100 time slots per learning periods. The Q-Learning algorithm was implemented with a learning rate $\alpha=0.5$ and a discount rate y=0.7. The chosen exploration strategy consists in using $\varepsilon=0.1$ during the first K/2 iterations and then $\varepsilon=0$ during the remaining K/2 iterations.

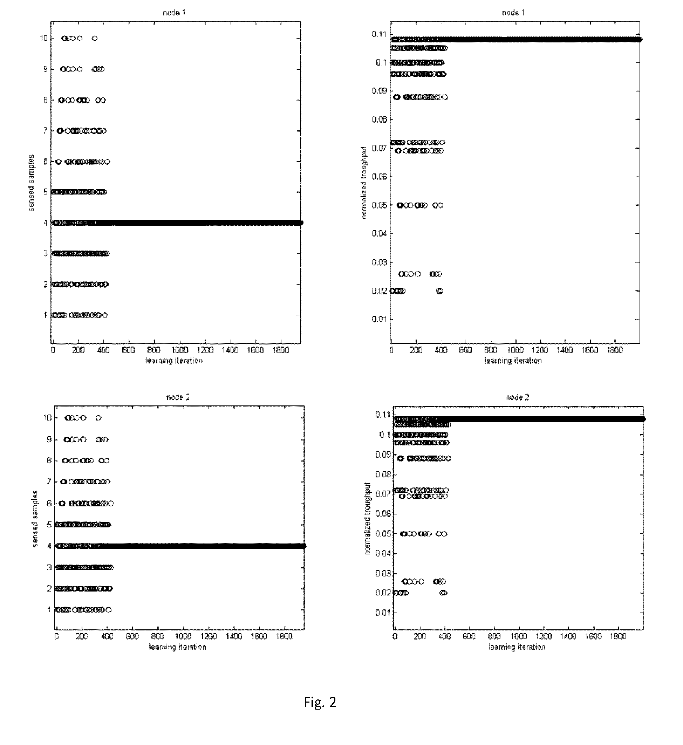

Figure 2 gives the result of the Q-learning algorithms when no exploration strategy is used ($\varepsilon=0$). It is observed that after 430 iterations, the algorithm converges to $M_1=M_2=4$ which is a sub-optimal solution. The optimal solution obtained by minimizing Equation (13) is $M_1=4, M_2=1$ (as the second node has a low sensing SNR, the first node has to contribute more to the sensing of the primary signal). After convergence, the normalized average throughputs are

$$\hat{R}_1 \Big/ C_{H_0,1} = \hat{R}_2 \Big/ C_{H_0,2} = 0.108$$ whereas the optimal normalized average throughputs are

$$\hat{R}_1 \Big/ C_{H_0,1} = 0.096$$ and $$\hat{R}_2 \Big/ C_{H_0,2} = 0.144$$ and lead to an inferior global cost in Equation (13).

Figure 3 gives the result of the Q-learning algorithms when the exploration strategy described at the beginning of this Section is used (i.e. $\varepsilon=0,1$). It is observed that the algorithm converges to the optimal solution defined in the previous paragraph.

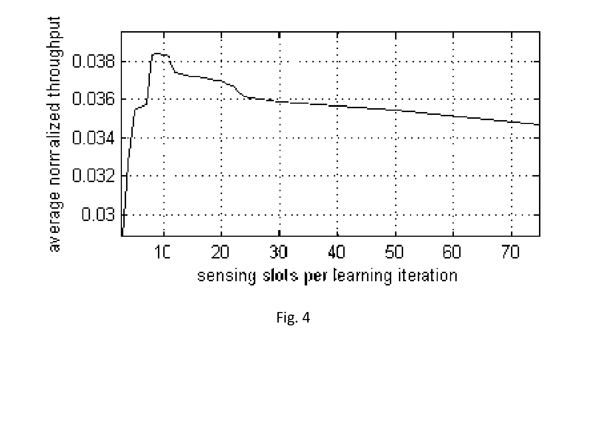

Figure 4 shows the average normalized throughput that is obtained with the algorithm with respect to parameter $r=T_L/T_H$ when the total duration of execution of the algorithm, equal to $rKT_H$, is kept constant. When r decreases, then the learning algorithm is executed more often but the ratio $\dfrac{n_{H_0,t}}{r}$ becomes a less accurate approximation of $P_{Ho}(1-P_F)$ and as a result, the agent becomes less aware of its impact on the false alarm probability. Therefore, there is a tradeoff value for r around $r\approx10$ as illustrated on Figure 4.

After convergence of the algorithm, if the value of the local SNR $y_1$ decreases from 0 dB to -10 dB, the algorithm requires an average of 1200 iterations before converging to the new optimal solution $M_1=M_2=1$.

The main advantage of the Q-learning algorithm is the minimization of control information sent between the secondary nodes and the coordinator node.

In the present invention,, a decentralized Q-learning algorithm to solve the problem of the allocation of the sensing durations in a cooperative cognitive network in a way that maximizes the throughputs of the cognitive radios was disclosed. Compared to a centralized allocation algorithm, the disclosed allocation technique minimizes the need for exchange of control information between the cognitive nodes and the coordinator node.

Numerical results of the example have demonstrated the need for an exploration strategy for the convergence of the sensing time allocation algorithm. It has furthermore be shown that there is an optimal tradeoff value for the frequency of execution of the learning algorithm.

## Claims

1. An iterative method for dynamically determining sensing time in cooperative secondary cognitive radio network comprising a plurality of cognitive nodes, said method comprising the steps of:

   e) each secondary cognitive nodes sensing the presence of a radio signal pertaining to a primary network during a predetermined period of time;
   f) each secondary cognitive nodes sending the results of sensing to a coordinating node globally deciding upon the presence of a primary network signal;
   g) depending on the presence of the primary network signal, secondary nodes transmitting a communication signal pertaining to the communication in the secondary network;

h) each secondary nodes determining upon current and past local and global conditions the sensing duration to be used in the next iteration, said determination maximising the secondary nodes throughputs,

step a to d being iteratively performed,

wherein the maximisation of the secondary nodes throughputs is performed by minimising for each node a cost function which decreases if the difference between the realised throughput and a required throughput decreases.

2. Method according to claim 1 wherein the cost function is in the from $c_{j,t} = \left(\widehat{R}_{j,t} - \overline{R}_{J}\right)^{2}$, $C_{j,t}$ being the cost function for the node j at iteration t, $\widehat{R}_{j,t}$ is the throughput realised by node j during iteration t, and $\overline{R}_{j}$ is the required throughput of node j.

3. Method according to any of the claims 1 or 2 wherein the determination of the sensing duration by each secondary nodes is performed using a learning algorithm.

4. Method according to claim 3 wherein said learning algorithm is a Q-learning algorithm.

5. Method according to any of the previous claims wherein the results sent in step b) is a one bit data representing a local decision about the presence of the primary network.

6. Method according to any of the previous claims wherein the coordinating node sends the results of the global decision about the presence of a primary network to each secondary nodes as a one bit data.

7. Method according to any of the previous claims wherein the ratio r of the duration $T_L$ of one iteration divided by the duration of a communication time slot $T_H$ is an integer larger than 2.

8. Method according to claim 7 wherein the duration of the sensing duration of node j determined in step d) is $M_j.T_s$, $M_j$ being an integer comprised between 0 and s, s being larger than 2, $T_s$ being the duration of a sensing time slot and fulfilling the condition $T_H = ST_s$.

Fig. 1

Fig. 2

Fig. 3

Fig. 4

Europäisches
Patentamt

European
Patent Office

Office européen
des brevets

# EUROPEAN SEARCH REPORT

**Application Number**

EP 11 17 9899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/145976 A1 (MOTOROLA INC [US]; YE ZHUAN [US]; BOK ALAN [US]; CORREAL NEIYER [US];) 3 December 2009 (2009-12-03)<br>* abstract *<br>* paragraphs [0002] - [0004], [0046] - [0064] * | 1-8 | INV.<br>H04W72/08<br><br>ADD.<br>H04W16/14<br>H04W72/04 |
| A | BEIBEI WANG ET AL: "Evolutionary cooperative spectrum sensing game: how to collaborate?",<br>IEEE TRANSACTIONS ON COMMUNICATIONS, IEEE SERVICE CENTER, PISCATAWAY, NJ. USA,<br>vol. 58, no. 3, 1 March 2010 (2010-03-01), pages 890-900, XP011304255,<br>ISSN: 0090-6778, DOI: 10.1109/TCOMM.2010.03.090084<br>* the whole document * | 1-8 | |
| A | BEIBEI WANG ET AL: "Evolutionary Game Framework for Behavior Dynamics in Cooperative Spectrum Sensing",<br>GLOBAL TELECOMMUNICATIONS CONFERENCE, 2008. IEEE GLOBECOM 2008. IEEE, IEEE, PISCATAWAY, NJ, USA,<br>30 November 2008 (2008-11-30), pages 1-5, XP031370282,<br>ISBN: 978-1-4244-2324-8<br>* the whole document *<br><br>-/-- | 1-8 | TECHNICAL FIELDS SEARCHED (IPC)<br><br>H04W |

The present search report has been drawn up for all claims

| Place of search | Date of completion of the search | Examiner |
|---|---|---|
| Munich | 18 January 2012 | Rüschmann, Frank |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

EP 11 17 9899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STERGIOS STOTAS ET AL: "Sensing Time and Power Allocation Optimization in Wideband Cognitive Radio Networks", GLOBECOM 2010, 2010 IEEE GLOBAL TELECOMMUNICATIONS CONFERENCE, IEEE, PISCATAWAY, NJ, USA, 6 December 2010 (2010-12-06), pages 1-5, XP031846427, ISBN: 978-1-4244-5636-9 * the whole document * | 1-8 | |
| T | OLIVIER VAN DEN BIGGELAAR ET AL: "Cooperative Spectrum Sensing for Cognitive Radios Using Distributed Q-Learning", VEHICULAR TECHNOLOGY CONFERENCE (VTC FALL), 2011 IEEE, IEEE, 5 September 2011 (2011-09-05), pages 1-5, XP032029742, DOI: 10.1109/VETECF.2011.6093258 ISBN: 978-1-4244-8328-0 * the whole document * | 1-8 | |

TECHNICAL FIELDS
SEARCHED (IPC)

The present search report has been drawn up for all claims

| Place of search | Date of completion of the search | Examiner |
|---|---|---|
| Munich | 18 January 2012 | Rüschmann, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 2 566 273 A1

**ANNEX TO THE EUROPEAN SEARCH REPORT
ON EUROPEAN PATENT APPLICATION NO.**

EP 11 17 9899

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2012

| Patent document cited in search report | Publication date | Patent family member(s) | Publication date |
|---|---|---|---|
| WO 2009145976 A1 | 03-12-2009 | US 2009247201 A1<br>WO 2009145976 A1 | 01-10-2009<br>03-12-2009 |

EPO FORM P0459

For more details about this annex : see Official Journal of the European Patent Office, No. 12/82

17

# EP 2 566 273 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **F. K. JONDRAL ; T. A. WEISS.** Spectrum pooling: An innovative strategy for the enhancement of spectrum efficiency. *IEEE Radio Communications,* 2004, vol. 42 (3), S8-S14
- **E. PEH et al.** Sensing-throughput tradeoff for cognitive radio networks''. *Proceedings of the IEEE International Conference on Communications (ICC,* June 2007
- **S. STOTAS et al.** Sensing time and power allocation optimization in wideband cognitive radio networks''. *GLOBECOM 2010, 2010 IEEE Global Telecommunications Conference,* December 2010, 1-5
- **K. CLANCY et al.** Evolutionary game framework for behavior dynamics in cooperative spectrum sensing. *Proceedings of the Global Telecommunications Conference (GLOBECOM,* November 2008
- **I. MILLINGTON.** Artificial Intelligence for Games. Morgan Kaufmann Publishers, 2006, 612-628